# EUROPEAN PATENT APPLICATION

(11) **EP 3 748 090 A1**
(43) Date of publication of application: **09.12.2020**
(21) Application number: 18910322.9
(22) Date of filing: 20.03.2018
(51) Int. Cl.: E02F 9/24

(54) **WORK VEHICLE**

(71) Applicant: Hitachi Construction Machinery Co., Ltd., Tokyo 110-0015 (JP)
(72) Inventor: FUJIYOSHI, Shouta, Hyogo 675-1113 (JP); ISHIDA, Kazuo, Hyogo 675-1113 (JP); KAWAHARA, Shouroku, Hyogo 675-1113 (JP)
(74) Representative: Manitz Finsterwald Patent- und Rechtsanwaltspartnerschaft mbB
(86) International application number: PCT/JP2018/011162
(87) International publication number: WO 2019/180843

(57) **Abstract**

A wheel loader 100 includes a front working device 101, an automatic brake device that automatically applies braking to a vehicle body, a vehicle speed sensor 15 that detects a vehicle speed of the vehicle body, an angle sensor 37 that detects a height of the front working device 101, an obstacle detection sensor 29 that detects an obstacle present in surroundings of the vehicle body, and a brake controller 27 that controls operation of the automatic brake device on the basis of a detection signal from the obstacle detection sensor 29, wherein the brake controller 27 limits a braking force of the automatic brake device when the height h of the front working device 101 is equal to or greater than a predetermined height h1, or the vehicle speed v is equal to or greater than a predetermined vehicle speed v1, and the obstacle has been detected by the obstacle detection sensor 29.

## Description

### TECHNICAL FIELD

The present invention relates to a work vehicle such as a wheel loader. More specifically, the present invention relates to a work vehicle provided with an automatic brake function that reduces the damage caused by collision with an obstacle.

### BACKGROUND ART

In a wheel loader that is an example of a work vehicle, a front frame is coupled to the front side of a rear frame to be swingable in the left-right direction, and a front working device including a lift arm, a bucket, and the like is mounted on the front frame. Also, an operating room is provided in the front portion of the rear frame, and an engine room and a counterweight are provided in the rear portion of the rear frame. A working device lever, an accelerator pedal, and the like are disposed in the interior of the operating room, and an operator boarding the operating room operates the working device lever and the accelerator pedal to operate the front working device, thereby performing various works, such as excavation and loading.

A driving assisting system for securing the safety of a worker working around the work vehicle has been required in recent years, and Patent Literature 1 discloses a tire roller in which when an obstacle detection sensor mounted on a vehicle body detects that the work vehicle and the worker come closer to each other, the vehicle body is emergency-stopped by operating a negative brake.

### CITATION LIST

### PATENT LITERATURE

PATENT LITERATURE 1: Japanese Patent Application Laid-Open No. 2016-153558

### SUMMARY OF INVENTION

### TECHNICAL PROBLEM

In Patent Literature 1, the wheel loader is given as an application example other than the tire roller, so that in applying the technique described in Patent Literature 1 to the wheel loader, it is possible to emergency-stop the vehicle body by operating the automatic brake when the wheel loader and the worker come closer to each other. However, in the work vehicle having the front working device, such as the wheel loader, the operation in which it travels in the state of lifting the front working device and in the loading state is assumed, so that when the automatic brake is operated in such states, a problem arises that the posture of the vehicle body becomes unstable.

The present invention has been made from such conventional art circumstances and an object of the present invention is to provide a work vehicle in which it is possible to reduce damage caused by collision with an obstacle while preventing vehicle posture from becoming unstable.

### SOLUTION TO PROBLEM

To achieve the above object, the representative present invention provides a work vehicle including a vehicle body, a speed stage switch that changes a speed stage of the vehicle body, a front working device provided in a front portion of the vehicle body, an automatic brake device that automatically applies braking to the vehicle body, a vehicle speed sensor that detects a vehicle speed of the vehicle body, a posture detection sensor that detects a height of the front working device, an obstacle detection sensor that detects an obstacle present in surroundings of the vehicle body, and a controller that controls the operation of the automatic brake device on the basis of a detection signal from the obstacle detection sensor, wherein the controller limits a braking force of the automatic brake device in a case where the height of the front working device detected from the posture detection sensor is equal to or greater than a predetermined height, or the vehicle speed detected by the vehicle speed sensor is equal to or greater than a predetermined vehicle speed, and the obstacle has been detected by the obstacle detection sensor.

### ADVANTAGEOUS EFFECTS OF INVENTION

According to the work vehicle according to the present invention, it is possible to reduce the damage caused by collision with the obstacle while preventing the vehicle posture from becoming unstable. It should be noted that objects, configurations, and effects other than the foregoing will be apparent from the description of the following embodiment.

### BRIEF DESCRIPTION OF DRAWINGS

[FIG. 1] FIG. 1 is a side view of a wheel loader according to an embodiment of the present invention.
[FIG. 2] FIG. 2 is a configuration diagram illustrating the oil hydraulic circuit and the electric circuit of the wheel loader.
[FIG. 3] FIG. 3 is an explanatory view illustrating the relationship between the vehicle speed at each speed stage and the driving force.
[FIG. 4] FIG. 4 is an explanatory view illustrating the relationship between the stepping amount of an accelerator pedal and the target engine rotational speed.
[FIG. 5] FIG. 5 is a block diagram of a main controller and a brake controller.
[FIG. 6] FIG. 6 is an explanatory view illustrating the relationship between the braking force of an automatic brake device and time.
[FIG. 7] FIG. 7 is a flowchart illustrating the processing procedure of the brake controller according to a first example.
[FIG. 8] FIG. 8 is a flowchart illustrating the processing procedure of the brake controller according to a second example.

### DESCRIPTION OF EMBODIMENT

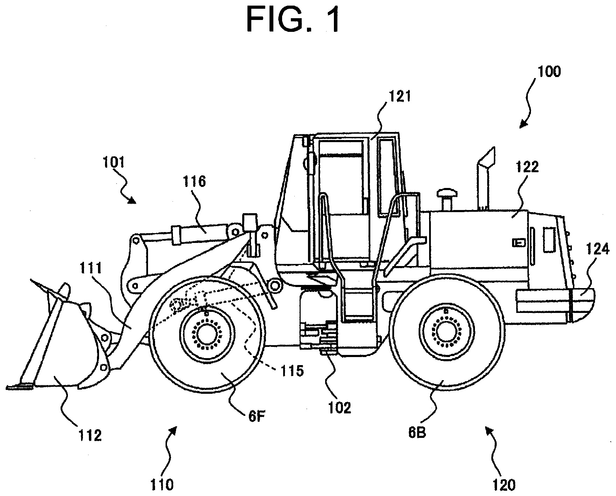

An embodiment of the present invention will be described below with reference to FIGS. 1 to 8.

FIG. 1 is a side view of a wheel loader 100 that is an example of a work vehicle according to the embodiment of the present invention. The wheel loader 100 includes a vehicle body including a front frame 110 and a rear frame 120, and a front working device 101 provided in the front portion of the vehicle body. The front frame 110 and the rear frame 120 are coupled to be turnable each other by a center pin 102, and the front frame 110 is bent to the left and right with respect to the rear frame 120 by the extension and retraction of a steering cylinder, not illustrated.

The front frame 110 is provided with a pair of left and right tires 6F and the front working device 101. The rear frame 120 is provided with a pair of left and right tires 6B, an operating room 121 that an operator boards, an engine room 122 in which an engine (described later) and the like are mounted, and a counterweight 124 for holding the balance of the vehicle body. The front working device 101 has an arm 111, a bucket 112, an arm cylinder 115, a bucket cylinder 116, and the like. The arm 111 is turned in the up-down direction (or is moved upward or downward) by driving the arm cylinder 115, and the bucket 112 is turned in the up-down direction (crowded or dumped) by driving the bucket cylinder 116.

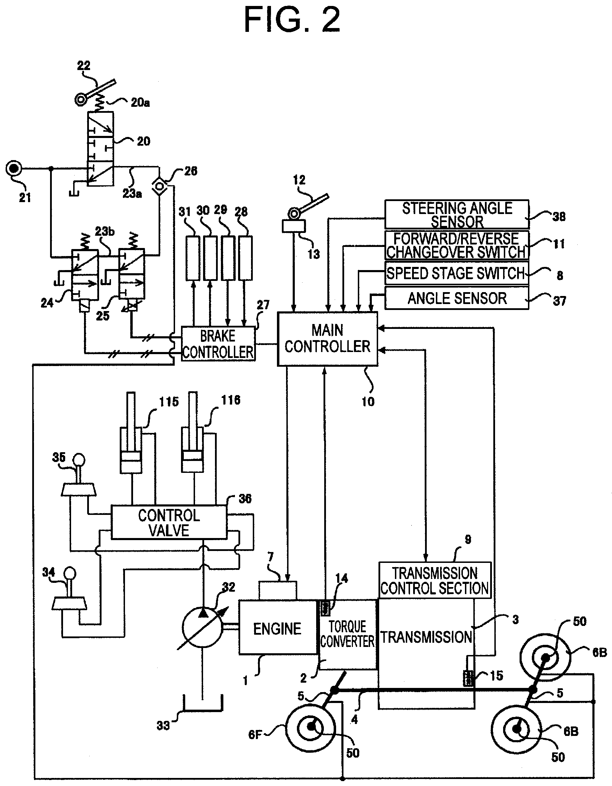

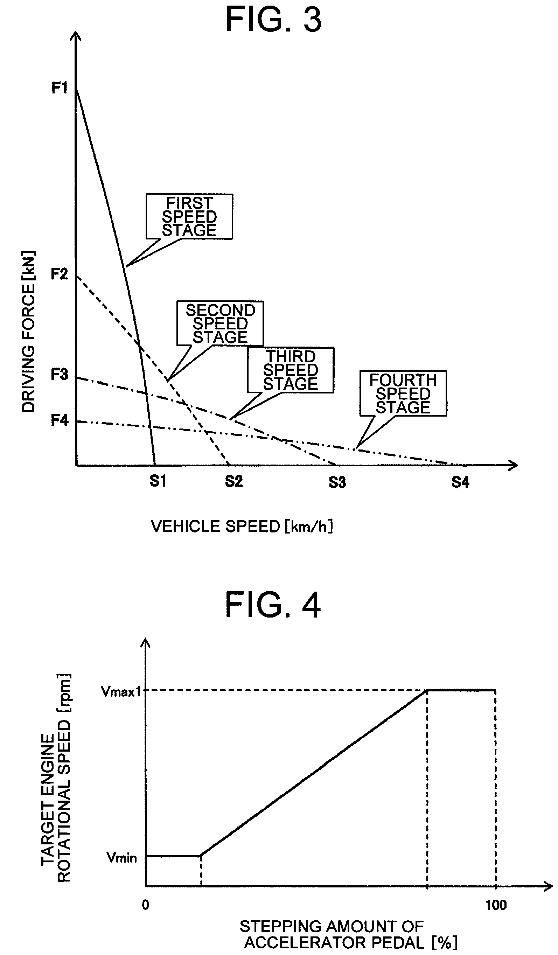

FIG. 2 is a configuration diagram illustrating the oil hydraulic circuit and the electric circuit of the wheel loader. FIG. 3 is an explanatory view illustrating the relationship between the vehicle speed at each speed stage and the driving force. FIG. 4 is an explanatory view illustrating the relationship between the stepping amount of an accelerator pedal and the target engine rotational speed.

The wheel loader 100 according to this embodiment controls the traveling of the vehicle body by a traveling driving system of the torque converter type, and as illustrated in FIG. 2, includes an engine 1, a torque converter 2 that has an input shaft coupled to the output shaft of the engine 1, a transmission 3 coupled to the output shaft of the torque converter 2, and a main controller 10 that controls each device such as the engine 1.

The torque converter 2 is a fluid clutch including an impeller, a turbine, and a stator which are known, and the rotation of the engine 1 is transmitted through the torque converter 2 to the transmission 3. The transmission 3 has a hydraulic clutch that shifts its speed stage to first to fourth speeds, and the rotation of the output shaft of the torque converter 2 is speed-changed by the transmission 3. The rotation after the speed change is transmitted through a propeller shaft 4 and axles 5 to the tires 6F and 6B, so that the wheel loader 100 travels.

The transmission 3 is a speed change gear having a plurality of solenoid valves corresponding to the first to fourth speed stages each having the highest speed as illustrated in FIG. 3, and speed-changes the rotation of the output shaft of the torque converter 2. The selection of the first to fourth speed stages is performed by a speed stage switch 8 provided in the operating room 121.

When the operator selects the desired speed stage by the speed stage switch 8, a speed stage signal related to the selected speed stage is outputted from the speed stage switch 8 to the main controller 10. Then, the main controller 10 outputs the speed stage signal to a transmission control section 9 to drive each of the plurality of solenoid valves of the transmission 3 according to the speed stage signal.

As illustrated in FIG. 3, the highest vehicle speed at the first speed stage is set to S1, the highest vehicle speed at the second speed stage is set to S2, the highest vehicle speed at the third speed stage is set to S3, and the highest vehicle speed at the fourth speed stage is set to S4. It should be noted that the magnitude relationship between S1, S2, S3, and S4 is S1 < S2 < S3 < S4. In FIG. 3, the first speed stage is indicated by a solid line, the second speed stage is indicated by a dashed line, the third speed stage is indicated by an alternate long and short dash line, and the fourth speed stage is indicated by an alternate long and two-short-dash line.

In this embodiment, the "first speed stage" is a speed stage selected for the excavation operation of the wheel loader 100. The "second speed stage" corresponds to a low speed stage selected when the wheel loader 100 travels toward a dump truck, not illustrated, in the loading operation, that is, for the rise run operation, and the highest vehicle speed thereof is set to, for example, 9 to 15 km/h. The "third speed stage" and the "fourth speed stage" are speed stages selected, for example, when the wheel loader 100 travels on a haulage load.

The selection of the traveling direction, that is, the forwarding or the reversing of the wheel loader 100 is performed by a forward/reverse changeover switch 11 provided in the operating room 121. Specifically, when the operator performs switching to the forwarding position by the forward/reverse changeover switch 11, a forward/reverse switching signal indicating the forwarding is outputted to the main controller 10, and the main controller 10 outputs, to the transmission control section 9, an instruction signal for bringing the forwarding clutch of the transmission 3 into the engaging state. When the transmission control section 9 receives the instruction signal related to the forwarding, a clutch control valve provided in the transmission control section 9 is operated to bring the forwarding clutch into the engaging state, thereby switching the traveling direction of the vehicle body to the forwarding. The reversing of the vehicle body is also switched by the same mechanism.

In the traveling driving system of the torque converter type, first, the operator steps on an accelerator pedal 12 provided in the operating room 121 to rotate the engine 1, thereby rotating the input shaft of the torque converter 2 with the rotation of the engine 1. Then, the output shaft of the torque converter 2 is rotated according to a set torque converter speed ratio, and as described above, the output torque from the torque converter 2 is transmitted to the tires 6F and 6B through the transmission 3, the propeller shaft 4, and the axles 5, so that the wheel loader 100 travels.

Specifically, the stepping amount of the accelerator pedal 12 detected by an accelerator stepping amount detector 13 is inputted to the main controller 10, and the target engine rotational speed is outputted as an instruction signal from the main controller 10 to an engine control section 7. When the engine control section 7 receives the instruction signal related to the target engine rotational speed, the number of rotations of the engine 1 is controlled according to the target engine rotational speed. As illustrated in FIG. 2, the rotational speed of the engine 1 is detected by an engine rotational speed sensor 14 provided on the output shaft side of the engine 1.

As illustrated in FIG. 4, the stepping amount of the accelerator pedal 12 and the target engine rotational speed are in a proportional relationship, and as the stepping amount of the accelerator pedal 12 is larger, the target engine rotational speed becomes higher. Thus, the rotational speed of the output shaft of the torque converter 2 rises to increase the vehicle speed. As illustrated in FIG. 2, the vehicle speed is detected as the rotational speed of the propeller shaft 4 by a vehicle speed sensor 15.

It should be noted that in FIG. 4, in the range in which the stepping amount of the accelerator pedal 12 is 0% to 20 or 30%, the target engine rotational speed is constant at a lowest target engine rotational speed Vmin irrespective of the stepping amount of the accelerator pedal 12. Also, in the range in which the stepping amount of the accelerator pedal 12 is 70 or 80% to 100%, the target engine rotational speed is constant at a highest target engine rotational speed Vmax irrespective of the stepping amount of the accelerator pedal 12.

In this way, in the relationship between the stepping amount of the accelerator pedal 12 and the target engine rotational speed, in the predetermined region in which the stepping amount of the accelerator pedal 12 is small, the target engine rotational speed is set to be maintained to the lowest target engine rotational speed Vmin, and in the predetermined region in which the stepping amount of the accelerator pedal 12 is large, the target engine rotational speed is set to be maintained to the highest target engine rotational speed Vmax. It should be noted that these settings can be arbitrarily changed.

The driving force of the propeller shaft 4 is transmitted to each of the axles 5 through a differential device, not illustrated. The differential device includes gears for transmitting the driving force of the propeller shaft 4 to the axle 5, and a disc brake (brake device) 50 of the wet multiplate type mounted on the axle 5. The gears are accommodated in a differential body, and the disc brake 50 is accommodated in a brake case. The differential body and the brake case are continuously connected to provide an integral case, and a brake cooling oil for cooling the gears and the disc brake 50 is accommodated in the interior of the case.

When supplied with a hydraulic oil through a brake valve 20, the disc brake 50 generates a braking force according to the pressure of the operating fluid. The brake valve 20 is a pressure reduction valve that reduces the pressure of a pressure oil supplied from a hydraulic power source 21 of the hydraulic oil to the pressure according to the compression force of a spring 20a. When a brake pedal 22 provided in the operating room 121 is depressed by the operator to compress the spring 20a according to the stepping force of the brake pedal 22, the brake valve 20 reduces the pressure of the pressure oil supplied from the hydraulic power source 21 such that the pressure of the pressure oil is a pressure according to the stepping force of the brake pedal 22. As the compression force of the spring 20a is higher, that is, as the stepping force of the brake pedal 22 is larger, the brake valve 20 reduces the pressure of the hydraulic oil such that the hydraulic oil having a high pressure is supplied to the disc brake 50.

The brake valve 20 is provided in a duct 23a, and a directional solenoid valve 24 and a proportional solenoid valve 25 that are the configuring members of an automatic brake device are provided in a duct 23b connected in parallel to the duct 23a. The duct 23a and the duct 23b are respectively connected to two input ports of a shuttle valve 26, and the output port of the shuttle valve 26 is connected to the disc brake 50. The shuttle valve 26 selects the higher one of the pressures of the duct 23a and the duct 23b.

The directional solenoid valve 24 is switching-operated to two positions of on/off by a switching signal from a brake controller 27, and opens or closes the duct 23b to control the flow of the pressure oil supplied from the hydraulic power source 21. Specifically, when an automatic brake changeover switch 28 is off (during the non-operation of the automatic brake device), the directional solenoid valve 24 is at the closed position to close the duct 23b, and when the automatic brake changeover switch 28 is on (during the operation of the automatic brake device), the directional solenoid valve 24 is switched to the open position to open the duct 23b. The proportional solenoid valve 25 is operated at an opening degree according to a control electric current (for example, 4 to 20 mA) that is a brake operation instruction from the brake controller 27, and continuously controls the flow rate of the pressure oil flowing through the duct 23b according to the electric current value of the control electric current.

The main controller 10 and the brake controller 27 configure the controller of the present invention, and the automatic brake changeover switch 28 is connected to the brake controller 27. When the operator operates the automatic brake changeover switch 28 to the on position, the brake controller 27 switches the automatic brake device from the stop state to the operation state (standby state). It should be noted that the operation of the automatic brake device will be described later in detail.

An obstacle detection sensor 29, a display device 30, and an alarm device 31 are respectively connected to the brake controller 27. The obstacle detection sensor 29 is a stereo camera installed at a predetermined position of the rear portion of the vehicle body, for example, near the counterweight 124, and in place of the stereo camera, a monocular camera, a millimeter radar, a laser beam (three-dimensional laser), and the like can also be used. The obstacle detection sensor 29 is a sensor that detects the presence or absence of an obstacle present rearward of the vehicle body, and the obstacle is another work vehicle, a worker or a person concerned entering and leaving a work site, a structural object at the work site, and the like.

The display device 30 is a monitor installed in the operating room 121, and the display screen of the display device 30 displays the operation state of the automatic brake device, the number of rotations of the engine, the vehicle speed, and the like. The alarm device 31 is a speaker and a buzzer installed in the operating room 121, and generates an alarm sound to notify the operator when the relative distance between the vehicle body and the obstacle is short, and during the operation of the automatic brake device.

Also, as illustrated in FIG. 2, the wheel loader 100 includes a hydraulic pump 32 that is driven by the engine 1 to supply the hydraulic oil to the front working device 101, a hydraulic oil tank 33 that stores the hydraulic oil, an arm operation lever 34 for operating the arm 111, a bucket operation lever 35 for operating the bucket 112, and a control valve (directional control valve) 36 that controls the flow of the pressure oil supplied from the hydraulic pump 32 to each of the arm cylinder 115 and the bucket cylinder 116.

When the operator operates the arm operation lever 34, for example, in the direction lifting the arm 111, a pilot pressure according to its operation amount is generated. Then, the generated pilot pressure acts on the control valve 36, and the spool in the control valve 36 performs stroke according to the pilot pressure. The hydraulic oil discharged from the hydraulic pump 32 flows through the control valve 36 into the arm cylinder 115, thereby extending the rod of the arm cylinder 115.

Also for the operation of the bucket 112, like the operation of the arm 111, the pilot pressure generated according to the operation amount of the bucket operation lever 35 acts on the control valve 36, so that the opening area of the spool of the control valve 36 is controlled to adjust the amount of the hydraulic oil flowing into and out of the bucket cylinder 116.

An angle sensor 37 and a steering angle sensor 38, in addition to the speed stage switch 8, the forward/reverse changeover switch 11, the accelerator stepping amount detector 13, the engine rotational speed sensor 14, and the vehicle speed sensor 15, which have been described above, are connected to the main controller 10. The angle sensor 37 is a posture detection sensor that detects the posture (height) of the front working device 101, and is provided on the base end side of the arm 111 (the end on the opposite side of the bucket 112). The steering angle sensor 38 detects the steering angle of a steering, not illustrated, provided in the operating room 121, and the traveling direction of the wheel loader 100 is changed according to the steering angle of the steering.

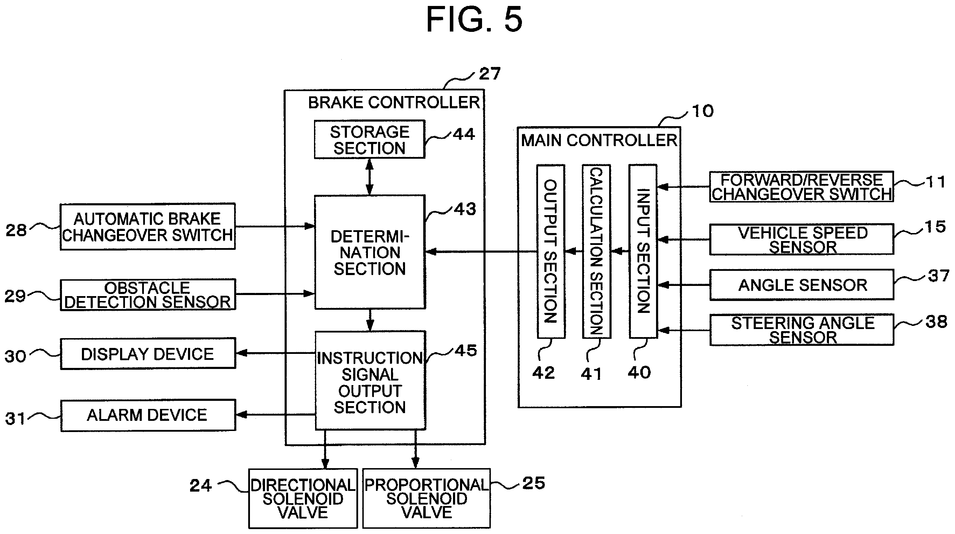

Next, the configurations and the functions of the main controller 10 and the brake controller 27 will be described with reference to FIGS. 5 to 8.

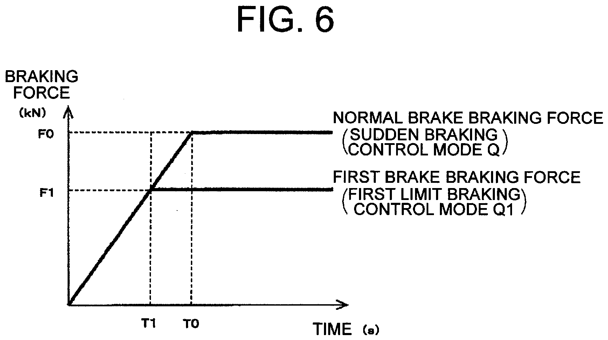

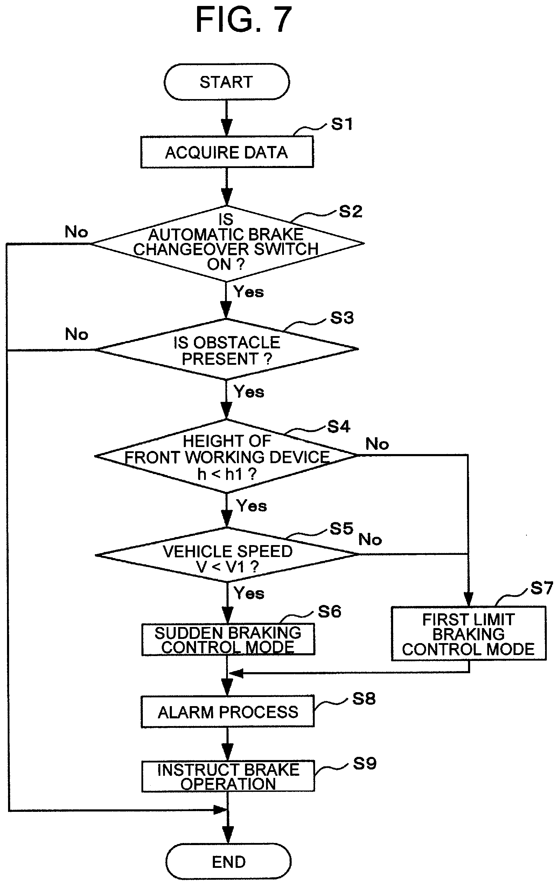

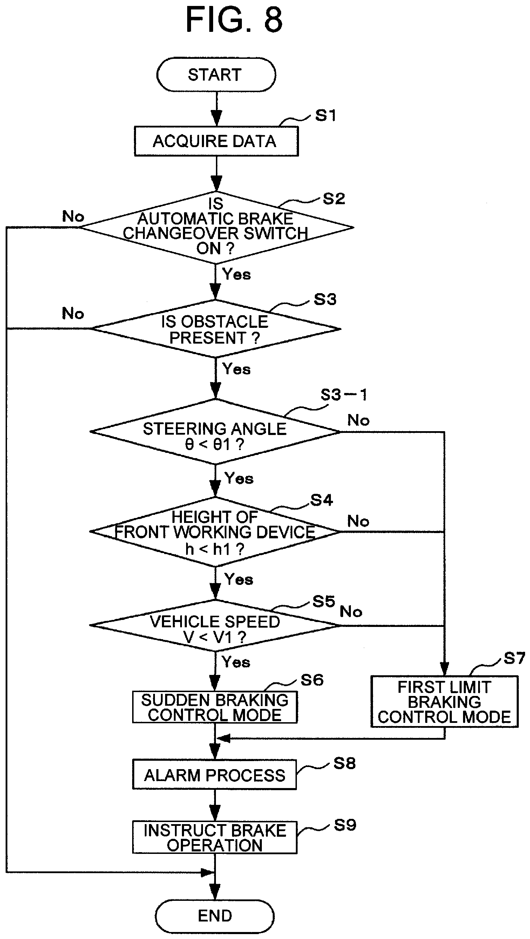

FIG. 5 is a block diagram illustrating the functions that the main controller 10 and the brake controller 27 have. FIG. 6 is an explanatory view illustrating the relationship between the braking force of the automatic brake device and time. FIG. 7 is a flowchart illustrating the processing procedure of the brake controller 27 according to a first example. FIG. 8 is a flowchart illustrating the processing procedure of the brake controller 27 according to a second example. Each of the main controller 10 and the brake controller 27 includes, as a hard configuration, a calculation processing device having a CPU, a ROM and a RAM that are memory devices, other peripheral circuits, and the like.

As illustrated in FIG. 5, the main controller 10 has an input section 40, a calculation section 41, and an output section 42. Various processes by the main controller 10 are achieved such that the CPU, not illustrated, loads a program stored in a storage device, such as an HDD, and the like, to memory, and executes it.

The input section 40 acquires each of data about the traveling direction of the vehicle body outputted from the forward/reverse changeover switch 11, the vehicle speed outputted from the vehicle speed sensor 15, the height of the front working device 101 outputted from the angle sensor (posture detection sensor) 37, and a steering angle outputted from the steering angle sensor 38.

When the traveling direction of the vehicle body is the reversing, the calculation section 41 calculates the vehicle speed v of the vehicle body, the height h of the front working device 101, and a steering angle θ on the basis of the detection data of the respective sensors 15, 37, and 38. The output section 42 outputs, to the brake controller 27, the vehicle speed v of the vehicle body, the height h of the front working device 101, and the steering angle θ calculated by the calculation section 41.

The brake controller 27 has a determination section 43, a storage section 44, and an instruction signal output section 45. Various processes by the brake controller 27 are achieved such that the CPU, not illustrated, loads the program stored in the storage device such as the HDD and the like to the memory, and executes it.

The determination section 43 acquires each of data about the operation state of the automatic brake device outputted from the automatic brake changeover switch 28 and the distance between the vehicle body and the obstacle outputted from the obstacle detection sensor 29, and at the presence of the obstacle in the operation state of the automatic brake device, performs the determination of the braking control mode of the brake on the basis of the vehicle speed v of the vehicle body, the height h of the front working device 101, and the steering angle θ outputted from the output section 42 of the main controller 10.

In this embodiment, two braking control modes of the brake are set according to each of elements of the vehicle speed v, the work machine height h, and the steering angle θ. The first braking control mode is a sudden braking control mode Q in which the vehicle posture including the front working device 101 is close to the traveling posture and the influence on the vehicle posture is small even if the sudden braking is performed. The second braking control mode is a first limit braking control mode Q1 in which the vehicle posture including the front working device 101 is slightly unstable as compared with the traveling posture, and the vehicle posture can become unstable if the sudden braking is performed.

The storage section 44 stores a table representing the relationship between the braking force and time in the sudden braking control mode Q and the first limit braking control mode Q1, and the determination section 43 outputs an instruction signal corresponding to each of the braking control modes Q and Q1 to the instruction signal output section 45. Also, the storage section 44 stores alarm threshold values and brake operation threshold values, which will be described later, such that they are associated with the sudden braking control mode Q and the first limit braking control mode Q1.

FIG. 6 is an explanatory view illustrating the relationship between the braking force and time in the sudden braking control mode Q and the first limit braking control mode Q1. As illustrated in FIG. 6, in the sudden braking control mode Q in which the influence on the vehicle posture is small even if the sudden braking is performed, the sudden braking is performed so that the braking force is maximum immediately after the operation of the automatic brake device, for applying a normal brake braking force. Also, in the first limit braking control mode Q1 in which the vehicle posture can become unstable if the sudden braking is performed, the gentle braking is performed so that the braking force is gradually increased after the operation of the automatic brake device, for applying a first brake braking force whose braking force is limited.

It should be noted that F0 illustrated in FIG. 6 is the maximum value of the normal brake braking force by the automatic brake, and becomes the maximum braking force at time T0 after the operation of the automatic brake. Also, F1 is the maximum value of the first brake braking force whose automatic brake is limited as compared with the normal brake braking force, and becomes the maximum braking force at time T1 after the operation of the automatic brake. From the operation of the automatic brake to the time T1, both the normal brake braking force and the first brake braking force are set to the relationship in which they are proportional with the elapse of time, and are set to the same braking force value. The normal brake braking force from the time T1 to the time T0 is set to the relationship in which it further increases on the basis of the above-described proportional relationship. Here, the F0 is previously set to avoid collision with the obstacle by the operation of the automatic brake, and is the maximum braking force that considers the allowance value for the distance between the obstacle and the vehicle body during the stop of the vehicle body after the operation of the automatic brake, and the F1 is the minimum braking force previously set to avoid collision with the obstacle, though the braking force is limited as compared with the F0.

Upon receiving the instruction signal from the determination section 43, the instruction signal output section 45 outputs an operation signal to the directional solenoid valve 24, and outputs a control signal corresponding to each of the braking control modes Q and Q1 to the proportional solenoid valve 25. Also, upon receiving the instruction signal from the determination section 43, the instruction signal output section 45 displays alarm display on the display screen of the display device 30, and operates the alarm device 31 to generate the alarm sound, in order to notify the operator that the distance between the vehicle body and the obstacle is short.

Next, the control processing by the brake controller 27 will be described with reference to the flowcharts illustrated in FIGS. 7 and 8. It should be noted that for example, the processing indicated in S1 to S9 in FIG. 7 is started when the key switch of the engine 1 is turned on, and is repeatedly performed in a predetermined cycle (for example, every 0.1 seconds) until the key switch of the engine 1 is turned off. Likewise, the processing in FIG. 8 is repeatedly performed in the predetermined cycle.

First, in the first example illustrated in FIG. 7, when the processing is started, the input section 40 acquires each of data about the traveling direction of the vehicle body outputted from the forward/reverse changeover switch 11, the vehicle speed outputted from the vehicle speed sensor 15, and the height of the front working device 101 outputted from the angle sensor (posture detection sensor) 37 (step S1). It should be noted that in the first example, data about the steering angle outputted from the steering angle sensor 38 is not used.

Next, the determination section 43 determines whether or not the on is selected on the basis of the output signal from the automatic brake changeover switch 28 (step S2), and when the on is selected by the automatic brake changeover switch 28 (step S2/Yes), the directional solenoid valve 24 is switched to the open position to put the automatic brake device on standby in the standby state, and allows the display screen of the display device 30 to display that the automatic brake device is in the operation state. It should be noted that the directional solenoid valve 24 is held in the open position while the automatic brake changeover switch 28 is on. On the other hand, when the automatic brake changeover switch 28 is off (step S2/No), the processing is ended.

When in step S2, the automatic brake changeover switch 28 is on, the determination section 43 acquires information about the presence or absence of the obstacle present rearward of the rear frame 120 and the relative distance between the vehicle body and the obstacle on the basis of the detection signal from the obstacle detection sensor 29 (step S3). Specifically, when the reversing of the vehicle body is selected from the output information of the forward/reverse changeover switch 11 acquired in step S1, the determination section 43 operates the obstacle detection sensor 29 for detecting the presence or absence of the obstacle present rearward of the rear frame 120, and at the detection of the obstacle, also acquires, together with it, the information about the relative distance between the vehicle body and the obstacle from the obstacle detection sensor 29.

When in step S3, the obstacle detection sensor 29 has not detected the obstacle (step S3/No), the processing is ended. In this case, the instruction signal is not outputted from the determination section 43 to the instruction signal output section 45, and the proportional solenoid valve 25 is at the closed position to close the duct 23b. Thus, the shuttle valve 26 selects the pressure of the duct 23a in which the brake valve 20 is provided, so that the hydraulic oil is supplied from the brake valve 20 to the disc brake 50 according to the stepping amount of the brake pedal 22 by the operator, thereby reducing the speed of the vehicle.

On the other hand, when in step S3, the obstacle detection sensor 29 has detected the obstacle (step S3/Yes), the determination section 43 performs the determination of the braking control mode of the brake on the basis of the vehicle speed v of the vehicle body and the height h of the front working device 101, which are outputted from the output section 42 of the main controller 10.

Specifically, the determination section 43 determines whether or not the height h of the front working device 101 is less than a predetermined height h1 (step S4), and when the posture of the front working device 101 is close to the traveling posture and h < h1 (step S4/Yes), determines whether or not the vehicle speed v of the vehicle body is less than a predetermined speed v1 (step S5).

Here, the predetermined height h1 that is the threshold value of the height of the front working device 101 and the predetermined speed v1 that is the threshold value of the vehicle speed are preferably appropriately set in consideration of the weight balance of the entire wheel loader 100, the safety, and the like. In this example, the predetermined height h1 is set to a height in which the posture of the arm 111 is tilted forward with respect to the horizon and does not exceed the haulage posture, and the predetermined speed v1 is set to the highest vehicle speed (for example, 9 to 15 km/h) when the speed stage switch 8 selects the second speed stage.

When in step S5, the vehicle speed v of the vehicle body is low and v < v1 (step S5/Yes), the determination section 43 sets the braking control mode of the brake to the sudden braking control mode Q (step S6). That is, when the height of the front working device 101 is small and the vehicle speed is low, the influence on the vehicle posture is small even if the sudden braking is performed, so that the braking control mode of the brake is set to the sudden braking control mode Q.

On the other hand, when in step S4, the height h of the front working device 101 is equal to or greater than the predetermined height h1 (h ≥ h1) (step S4/No), or when in step S5, the vehicle speed v is equal to or greater than the predetermined speed v1 (v ≥ v1) (step S5/No), the determination section 43 sets the braking control mode of the brake to the first limit braking control mode Q1 (step S7). That is, when the height of the front working device 101 is large, or when the vehicle speed is high, the vehicle posture can become unstable if the sudden braking is performed, so that the braking control mode of the brake is set to the first limit braking control mode Q1.

Next, the sequence goes to step S8, and the determination section 43 executes the alarm process on the basis of the vehicle speed v acquired in step S1 and the relative distance between the vehicle body and the obstacle acquired in step S3. Specifically, the determination section 43 outputs the alarm instruction to the instruction signal output section 45 when the relative distance between the vehicle body and the obstacle is below the alarm threshold value corresponding to the braking control mode set in step S6 or step S7, and generates the alarm to the operator through the alarm device 31.

Here, the alarm threshold value is set to be different for each braking control mode. In the sudden braking control mode Q, for example, the alarm threshold value is "the vehicle speed of 10 km/h and the distance to the obstacle of 6 m", and when the relative distance between the vehicle body and the obstacle is below this threshold value (6 m), the alarm is generated from the alarm device 31. On the other hand, in the first limit braking control mode Q1, for example, the alarm threshold value is "the vehicle speed of 10 km/h and the distance to the obstacle of 8 m", and when the relative distance between the vehicle body and the obstacle is below this threshold value (8 m), the alarm is generated from the alarm device 31. Thus, the first limit braking control mode Q1 generates the alarm to the operator earlier than the sudden braking control mode Q to prompt the brake operation. Of course, when the relative distance between the vehicle body and the obstacle is not below the alarm threshold value, the sequence goes to step S9 without generating the alarm.

Next, the sequence goes to step S9, and the determination section 43 performs the processing for operating the automatic brake device on the basis of the vehicle speed v acquired in step S1 and the relative distance between the vehicle speed and the obstacle acquired in step S3. The brake operation threshold value for operating the automatic brake device is previously set to each braking control mode, and when the relative distance between the vehicle body and the obstacle is below the brake operation threshold value, the determination section 43 operates the proportional solenoid valve 25 by the different characteristic according to the braking control mode set in step S6 or step S7.

In the specific description, in the sudden braking control mode Q, for example, the threshold value of the brake operation is "the vehicle speed of 10 km/h and the distance to the obstacle of 2 m" and when the relative distance between the vehicle body and the obstacle is below this threshold value (2 m), the determination section 43 outputs the control electric current having the maximum value (for example, 20 mA) through the instruction signal output section 45 to the proportional solenoid valve 25 to maximize the opening degree of the proportional solenoid valve 25, thereby applying the sudden braking.

On the contrary, in the first limit braking control mode Q1, the threshold value of the brake operation is "the vehicle speed of 10 km/h and the distance to the obstacle of 4 m", and when the relative distance between the vehicle body and the obstacle is below this threshold value (4 m), the determination section 43 outputs the control electric current having about 70% of the maximum value (for example, 14 mA) through the instruction signal output section 45 to the proportional solenoid valve 25, so that the opening degree of the proportional solenoid valve 25 is about 70%, thereby applying the gentle braking. Then, when the processing in step S9 is performed, a series of processing in this cycle is ended. Of course, when in step S9, the relative distance between the vehicle body and the obstacle is not below the brake operation threshold value, the processing is ended without operating the automatic brake.

Next, a second example will be described with reference to FIG. 8, but the description about the processing overlapping with FIG. 7 is omitted. In the second example illustrated in FIG. 8, when the processing is started, the input section 40 acquires each of data about the traveling direction of the vehicle body outputted from the forward/reverse changeover switch 11, the vehicle speed outputted from the vehicle speed sensor 15, the height of the front working device 101 outputted from the angle sensor (posture detection sensor) 37, and the steering angle outputted from the steering angle sensor 38 (step S1).

Then, the feature of the processing according to the second example is in that step S3-1 is provided. In step S3-1, it is determined whether or not the steering angle θ is less than a predetermined angle θ1, and when it is determined that the steering angle θ is equal to or greater than the predetermined angle θ1 (in the case of No in step S3-1), the determination section 43 sets the brake braking control mode to the first limit braking control mode Q1 irrespective of the values of the height h of the front working device 101 and the vehicle speed v of the vehicle body. Here, the predetermined angle θ1 is appropriately set in consideration of the weight balance of the entire wheel loader 100, the safety during traveling, and the like, and in this example, is set to, for example, about 30 degrees. It should be noted that the processing thereafter is the same as the first example.

As described above, the wheel loader 100 according to this embodiment includes the front working device 101 provided in the front portion of the vehicle body, the automatic brake device (the directional solenoid valve 24 and the proportional solenoid valve 25) that automatically applies braking to the vehicle body, the speed stage switch 8 that changes the speed stage of the vehicle body, the vehicle speed sensor 15 that detects the vehicle speed of the vehicle body, the angle sensor 37 that detects the height of the front working device 101 (posture detection sensor), the obstacle detection sensor 29 that detects the obstacle present in the surroundings of the vehicle body, and the controller (the main controller 10 and the brake controller 27) that controls the operation of the automatic brake device on the basis of the detection signal from the obstacle detection sensor 29, wherein the controller controls the automatic brake device to apply braking to the vehicle body by the first brake braking force weaker than normal when the height h of the front working device 101 detected from the angle sensor 37 is equal to or greater than the predetermined height h1, or the vehicle speed v detected by the vehicle speed sensor 15 is equal to or greater than the predetermined vehicle speed, and the obstacle has been detected by the obstacle detection sensor 29, so that it is possible to reduce the damage caused by collision with the obstacle while preventing the vehicle posture from becoming unstable.

Also, as in the second example illustrated in FIG. 8, three determination elements which are the braking control mode of the brake that are the height h of the front working device 101, the vehicle speed v, and the steering angle θ detected by the steering angle sensor 38 are used, the controller controlling the automatic brake device to apply braking to the vehicle body by the first brake braking force weaker than normal when at least one of conditions where the steering angle θ is equal to or greater than the predetermined angle, where the height h of the front working device 101 is equal to or greater than the predetermined height h1, and where the vehicle speed v is equal to or greater than the predetermined vehicle speed is satisfied, and the obstacle has been detected by the obstacle detection sensor 29, so that it is possible to prevent the vehicle tilt due to the sudden braking even when curve traveling is performed in the unstable work posture.

However, the present invention is not limited to the two determination elements which are the braking control mode that are the height h of the front working device 101 and the vehicle speed v, or the three determination elements which are the braking control mode that are the height h of the front working device 101, the vehicle speed v, and the steering angle θ, and for example, the loading amount of the bucket 112 may be used in place of the steering angle θ to set the control mode on the basis of three determination elements which are the braking control mode that are the height h of the front working device 101, the vehicle speed v, and the loading amount.

It should be noted that the above embodiment is illustrated for describing the present invention, and the scope of the present invention is not intended to be limited to only those embodiments. Those skilled in the art can embody the present invention in other various forms without departing from the purport of the present invention.

Also, in the above embodiment, the obstacle detection sensor 29 performs the sensing of the obstacle during the reversing of the vehicle body, but the period in which the sensing of the obstacle is executed is not limited to during only the reversing of the vehicle body, and for example, the sensing may be performed during only the forwarding and both the forwarding and reversing of the vehicle body. Also, a second limit braking control mode that operates the automatic brake device by a second brake braking force further weaker than the first brake braking force may be set to operate the automatic brake device in the second limit braking control mode that further limits the brake braking as compared with the first limit braking control mode depending on the conditions of various parameters such as the height of the front working device, the vehicle speed, and the steering angle.

### REFERENCE SIGNS LIST

1... engine,
2... torque converter,
3... transmission,
8... speed stage switch,
10... main controller (controller),
11... forward/reverse changeover switch,
12... accelerator pedal,
13... accelerator stepping amount detector,
14... engine rotational speed sensor,
15... vehicle speed sensor,
20... brake valve,
21... hydraulic power source,
22... brake pedal,
23a, 23b... duct,
24... directional solenoid valve (automatic brake device),
25... proportional solenoid valve (automatic brake device),
26... shuttle valve,
27... brake controller (controller),
28... automatic brake changeover switch,
29... obstacle detection sensor,
30... display device,
31... alarm device,
32... hydraulic pump,
34... arm operation lever,
35... bucket operation lever,
36... control valve (directional control valve),
37... angle sensor (posture detection sensor),
38... steering angle sensor,
40... input section,
41... calculation section,
42... output section,
43... determination section,
44... storage section,
45... instruction signal output section,
50... disc brake,
100... wheel loader (work vehicle),
101... front working device,
110... front frame (vehicle body),
111... arm,
112... bucket,
115... arm cylinder,
116... bucket cylinder,
120... rear frame (vehicle body),
121... operating room

## Claims

1. A work vehicle comprising:
a vehicle body;
a speed stage switch that changes a speed stage of the vehicle body;
a front working device provided in a front portion of the vehicle body;
an automatic brake device that automatically applies braking to the vehicle body;
a vehicle speed sensor that detects a vehicle speed of the vehicle body;
a posture detection sensor that detects a height of the front working device;
an obstacle detection sensor that detects an obstacle present in surroundings of the vehicle body; and
a controller that controls operation of the automatic brake device on the basis of a detection signal from the obstacle detection sensor,
wherein the controller limits a braking force of the automatic brake device in a case where the height of the front working device detected from the posture detection sensor is equal to or greater than a predetermined height, or the vehicle speed detected by the vehicle speed sensor is equal to or greater than a predetermined vehicle speed, and the obstacle has been detected by the obstacle detection sensor.

2. The work vehicle according to claim 1, further comprising a steering angle sensor that detects a steering angle,
wherein the controller limits the braking force of the automatic brake device in a case where at least one of conditions where the steering angle detected by the steering angle sensor is equal to or greater than a predetermined angle, where the height of the front working device is equal to or greater than the predetermined height, and where the vehicle speed is equal to or greater than the predetermined vehicle speed is satisfied, and the obstacle has been detected by the obstacle detection sensor.
